# EUROPEAN PATENT APPLICATION

(11) **EP 3 296 891 A2**
(43) Date of publication of application: **21.03.2018**
(21) Application number: 17178560.3
(22) Date of filing: 18.12.2012
(51) Int. Cl.: G06F 17/30, H04L 29/06, H04L 29/08

(54) **WEB APPLICATION INTERACTION METHOD, APPARATUS, AND SYSTEM**

(62) Divisional of application: 12890298.8
(71) Applicant: HUAWEI TECHNOLOGIES CO., LTD., Shenzhen Guangdong 518129 (CN)
(72) Inventor: XU, Wenhua, Shenzhen, Guangdong 518129 (CN)
(74) Representative: Goddar, Heinz J.

(57) **Abstract**

Embodiments of the present invention provide a web application interaction method, apparatus, and system that are applied to the communications field and can remove a limitation of a web app opening manner during web app interaction. The method includes: acquiring a URL of a slave web application from an invocation request, where the slave web application is an invoked web application; acquiring a window object of the slave web application from a mapping relationship between a URL and a window object of the slave web application by using the URL of the slave web application; acquiring invocation information of a master web application from the invocation request; and sending the invocation information of the master web application to a window of the slave web application according to the window object of the slave web application, where the master web application is a web application that invokes the slave web application.

## Description

### TECHNICAL FIELD

The present invention relates to the communications field and the Internet field, and in particular, to a web application interaction method, apparatus, and system.

### BACKGROUND

A web application (web app) refers to a web (network)-based system and application. With development of the HTML (Hypertext Markup Language) 5 and support of browsers, web apps present richer content. However, web apps are still relatively isolated in terms of interaction between them, where interaction between web apps refers to invoking, in one web app, another web app to complete a specific function. In the prior art, a Google browser or a Firefox browser allows web apps to exchange web app information in the browser. However, an invoked web app generally can only be a web app that is opened in the browser under control of a requesting web app, and a web app that is opened in another manner cannot be invoked. For example, a web app that is opened by entering a URL in a browser cannot be invoked, and a web app that is opened under control of another web app cannot be invoked by the requesting web app. As a result, web app interaction is restricted by a web app opening manner.

### SUMMARY

Embodiments of the present invention provide a web application interaction method, apparatus, and system, which can remove a limitation of a web app opening manner during web app interaction.

To achieve the foregoing objective, the embodiments of the present invention adopt the following technical solutions.

According to a first aspect of the present invention, a web application interaction method is provided, including:
acquiring a uniform resource locator URL of a slave web application from an invocation request, where the slave web application is an invoked web application;
acquiring a window object of the slave web application from a mapping relationship between a URL and a window object of the slave web application by using the URL of the slave web application;
acquiring invocation information of a master web application from the invocation request; and
sending the invocation information of the master web application to a window of the slave web application according to the window object of the slave web application, where the master web application is a web application that invokes the slave web application.

In a first possible implementation manner with reference to the first aspect, after the acquiring a uniform resource locator URL of a slave web application from an invocation request, the method further includes:
querying, in the mapping relationship between a URL and a window object of the slave web application, whether the URL of the slave web application exists; and
if the URL of the slave web application does not exist, opening the slave web application and saving a mapping relationship between the URL and the window object of the slave web application.

In a second possible implementation manner with reference to the first aspect or the first possible implementation manner,
the window object includes a window identifier, a communication type, and a specific communication channel; and
the communication type includes a data sharing area, a window communication channel, or a browser communication channel.

In a third possible implementation manner with reference to the first aspect, the first possible implementation manner, or the second possible implementation manner, the method further includes:
sending an application programming interface API registration request of the slave web application to a server, where the API registration request includes an API logic script of the slave web application, so that the server returns the API logic script of the slave web application to the master web application after receiving an API acquisition request of the slave web application.

In a fourth possible implementation manner with reference to the third possible implementation manner:
before the acquiring a uniform resource locator URL of a slave web application from an invocation request, the method further includes:
   sending a domain registration request of the master web application to the server, where the domain registration request includes domain information and/or path information of the master web application, so that the server saves the domain information and/or path information included in the domain registration request.

In a fifth possible implementation manner with reference to the fourth possible implementation manner, after the acquiring invocation information of a master web application from the invocation request, the method further includes:
sending a detection request of the master web application to the server, so that the server performs matching between domain information and/or path information of the master web application carried in the detection request and the domain information and/or path information saved by the server; and
receiving detection result information sent by the server.

In a sixth possible implementation manner with reference to the fifth possible implementation manner, after the detection result information indicates that the matching is successful, the method further includes:
sending the API acquisition request of the slave web application to the server;
receiving the API logic script of the slave web application sent by the server; and
running the API logic script of the slave web application.

In a seventh possible implementation manner with reference to the second to sixth possible implementation manners, when the communication type is a data sharing area, the sending the invocation information of the master web application to a window of the slave web application according to the window object of the slave web application includes:
acquiring, by a window of the master web application from the window object, that the specific communication channel of the slave web application is a particular data sharing area;
saving, by the window of the master web application, the invocation information of the master web application to the particular data sharing area, where the invocation information includes a target window identifier, a source window identifier, and message content;
performing matching, by the window of the slave web application, between the target window identifier in the invocation information in the particular data sharing area and the window identifier of the slave web application; and
if the matching is successful, acquiring the invocation information from the particular data sharing area by using the window of the slave web application.

In an eighth possible implementation manner with reference to the second to sixth possible implementation manners, when the communication type is a data sharing area, the sending the invocation information of the master web application to a window of the slave web application according to the window object of the slave web application includes:
registering a listening event in the data sharing area, where a listening parameter of the listening event includes the window identifier, the communication type, and the specific communication channel that are of the slave web application;
acquiring, by a window of the master web application from the window object, that the specific communication channel of the slave web application is a particular data sharing area;
saving, by the window of the master web application, the invocation information of the master web application to the particular data sharing area, where the invocation information includes a target window identifier, a source window identifier, and message content;
performing matching, by the window of the master web application, between the window identifier of the slave web application and the target window identifier in the invocation information according to the registered listening event; and
when the window identifier of the slave web application that matches the target window identifier in the invocation information exists in the particular data sharing area, receiving, by a target window of the slave web application, the invocation information sent by the particular data sharing area; or
receiving, by the slave web application, a message notification sent by the particular data sharing area, and acquiring, by a target window, the invocation information according to the message notification, where the target window is a window indicated by the target window identifier.

In a ninth possible implementation manner with reference to the second to sixth possible implementation manners, when the communication type is a browser communication channel, the sending the invocation information of the master web application to a window of the slave web application according to the window object of the slave web application includes:
acquiring, from the window object, that the specific communication channel of the slave web application is a particular browser communication channel; and
sending the invocation information of the master web application to a browser corresponding to the slave web application through the particular browser communication channel, and sending, by the browser corresponding to the slave web application, the invocation information to a corresponding window in the browser corresponding to the slave web application.

In a tenth possible implementation manner with reference to the second to sixth possible implementation manners, when the communication type is a window communication channel, the sending the invocation information of the master web application to a window of the slave web application according to the window object of the slave web application includes:
acquiring, from the window object, that the specific communication channel of the slave web application is a particular window communication channel; and
sending the invocation information of the master web application to a corresponding window of the slave web application through the particular window communication channel.

According to a second aspect, a web application interaction method is provided, including:
receiving a detection request of a master web application in a browser, where the detection request is sent by the master web application and includes domain information and/or path information of the master web application;
performing matching between the domain information and/or path information of the master web application carried in the detection request and domain information and/or path information saved by a server;
generating detection result information according to a matching result, where the detection result information indicates that the matching is successful or that the matching fails; and
sending the detection result information to the master web application in the browser.

In a second possible implementation manner with reference to the second aspect, the method further includes: receiving an application programming interface API registration request of a slave web application, where the API registration request includes an API logic script of the slave web application; and
saving the API logic script of the slave web application.

In a third possible implementation manner with reference to the second aspect or the second possible implementation manner, the method further includes:
receiving a domain registration request of the master web application, where the domain registration request includes the domain information and/or path information of the master web application; and
saving the domain information and/or path information included in the domain registration request.

In a fourth possible implementation manner with reference to the third possible implementation manner, after the matching is successful, the method further includes:
receiving an API acquisition request of the slave web application sent by the master web application in the browser; and
sending the API logic script of the slave web application to the master web application in the browser, so that the master web application in the browser runs the API logic script of the slave web application.

According to a third aspect, a browser is provided, including:
a processor, configured to acquire a uniform resource locator URL of a slave web application from an invocation request, where the slave web application is an invoked web application; and
a memory, configured to acquire a window object of the slave web application from a mapping relationship between a URL and a window object of the slave web application by using the URL of the slave web application, where:
   the processor is further configured to acquire invocation information of a master web application from the invocation request; and
   the processor is further configured to send the invocation information of the master web application to a window of the slave web application according to the window object of the slave web application, where the master web application is a web application that invokes the slave web application.

In a first possible implementation manner with reference to the third aspect, the processor is further configured to:
query, in the mapping relationship between a URL and a window object of the slave web application, whether the URL of the slave web application exists; and
if the URL of the slave web application does not exist, open the slave web application and save a mapping relationship between the URL and the window object of the slave web application.

In a second possible implementation manner with reference to the third aspect or the first possible implementation manner, the window object includes a window identifier, a communication type, and a specific communication channel; and
the communication type includes a data sharing area, a window communication channel, or a browser communication channel.

In a third possible implementation manner with reference to the third aspect, the first possible implementation manner, or the second possible implementation manner, the browser further includes:
a sender, configured to send an application programming interface API registration request of the slave web application to a server, where the API registration request includes an API logic script of the slave web application, so that the server returns the API logic script of the slave web application to the master web application after receiving an API acquisition request of the slave web application.

In a fourth possible implementation manner with reference to the third possible implementation manner,
the sender is further configured to send a domain registration request of the master web application to the server, where the domain registration request includes domain information and/or path information of the master web application, so that the server saves the domain information and/or path information included in the domain registration request.

In a fifth possible implementation manner with reference to the fourth possible implementation manner,
the sender is further configured to send a detection request of the master web application to the server, so that the server performs matching between domain information and/or path information of the master web application carried in the detection request and the domain information and/or path information saved by the server; and
the browser further includes:
a receiver, configured to receive detection result information sent by the server.

In a sixth possible implementation manner with reference to the fifth possible implementation manner,
the sender is further configured to send the API acquisition request of the slave web application to the server;
the receiver is further configured to receive the API logic script of the slave web application sent by the server; and
the processor is further configured to run the API logic script of the slave web application.

In a seventh possible implementation manner with reference to the second to sixth possible implementation manners, when the communication type is a data sharing area, the processor is specifically configured to:
acquire, by a window of the master web application from the window object, that the specific communication channel of the slave web application is a particular data sharing area;
save, by the window of the master web application, the invocation information of the master web application to the particular data sharing area, where the invocation information includes a target window identifier, a source window identifier, and message content;
perform matching, by the window of the slave web application, between the target window identifier in the invocation information in the particular data sharing area and the window identifier of the slave web application; and
if the matching is successful, acquire the invocation information from the particular data sharing area by using the window of the slave web application.

In an eighth possible implementation manner with reference to the second to sixth possible implementation manners, when the communication type is a data sharing area, the processor is specifically configured to:
register a listening event in the data sharing area, where a listening parameter of the listening event includes the window identifier, the communication type, and the specific communication channel that are of the slave web application;
acquire, by a window of the master web application from the window object, that the specific communication channel of the slave web application is a particular data sharing area;
save, by the window of the master web application, the invocation information of the master web application to the particular data sharing area, where the invocation information includes a target window identifier, a source window identifier, and message content;
perform matching, by the window of the master web application, between the window identifier of the slave web application and the target window identifier in the invocation information according to the registered listening event; and
when the window identifier of the slave web application that matches the target window identifier in the invocation information exists in the particular data sharing area, receive, by a target window of the slave web application, the invocation information sent by the particular data sharing area; or
receive, by the slave web application, a message notification sent by the particular data sharing area, and acquire, by a target window, the invocation information according to the message notification, where the target window is a window indicated by the target window identifier.

In a ninth possible implementation manner with reference to the second to sixth possible implementation manners, when the communication type is a browser communication channel, the processor is specifically configured to:
acquire, from the window object, that the specific communication channel of the slave web application is a particular browser communication channel; and
send the invocation information of the master web application to a browser corresponding to the slave web application through the particular browser communication channel, and send, by the browser corresponding to the slave web application, the invocation information to a corresponding window in the browser corresponding to the slave web application.

In a tenth possible implementation manner with reference to the second to sixth possible implementation manners, when the communication type is a window communication channel, the processor is specifically configured to:
acquire, from the window object, that the specific communication channel of the slave web application is a particular window communication channel; and
send the invocation information of the master web application to a corresponding window of the slave web application through the particular window communication channel.

According to a fourth aspect, a server is provided, including:
a receiver, configured to receive a detection request of a master web application in a browser, where the detection request is sent by the master web application and includes domain information and/or path information of the master web application;
a processor, configured to perform matching between the domain information and/or path information of the master web application carried in the detection request and domain information and/or path information saved by a server, where:
the processor is further configured to generate detection result information according to a matching result, where the detection result information indicates that the matching is successful or that the matching fails; and
a sender, configured to send the detection result information to the master web application in the browser.

In a first possible implementation manner with reference to the fourth aspect,
the receiver is further configured to receive an application programming interface API registration request of a slave web application sent by the browser, where the API registration request includes an API logic script of the slave web application; and
the server further includes:
a memory, configured to save the API logic script of the slave web application.

In a second possible implementation manner with reference to the fourth aspect or the first possible implementation manner,
the receiver is further configured to receive a domain registration request of the master web application, where the domain registration request includes the domain information and/or path information of the master web application; and
the memory is further configured to save the domain information and/or path information included in the domain registration request.

In a third possible implementation manner with reference to the second possible implementation manner,
the receiver is further configured to receive an API acquisition request of the slave web application sent by the browser; and
the sender is further configured to send the API logic script of the slave web application to the master web application in the browser, so that the master web application in the browser runs the API logic script of the slave web application.

According to a fifth aspect, a web application interaction system is provided, including:
the browser according to any one of the foregoing possible implementation manners; and
the server according to any one of the foregoing possible implementation manners.

The embodiments of the present invention provide a web application interaction method, apparatus, and system. The web application interaction method includes: acquiring a uniform resource locator URL of a slave web application from an invocation request, where the slave web application is an invoked web application; acquiring a window object of the slave web application from a mapping relationship between a URL and a window object of the slave web application by using the URL of the slave web application; acquiring invocation information of a master web application from the invocation request; and sending the invocation information of the master web application to a window of the slave web application according to the window object of the slave web application, where the master web application is a web application that invokes the slave web application. In this way, because a browser stores a mapping relationship between a URL and a window object of a slave web application, when the slave web application is invoked, a corresponding window object may be acquired from the mapping relationship between a URL and a window object of the slave web application, so as to implement that a master web application invokes the slave web application. A process of saving the mapping relationship between a URL and a window object of the slave web application is not restricted by a web app opening manner; therefore, a limitation of the web app opening manner may be removed during web app interaction.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a web application interaction method according to an embodiment of the present invention;
FIG. 2 is a flowchart of another web application interaction method according to an embodiment of the present invention;
FIG. 3 is a flowchart of still another web application interaction method according to an embodiment of the present invention;
FIG. 4 is a flowchart of a method used by a browser to acquire a window object of a slave web application according to an embodiment of the present invention;
FIG. 5 is a schematic structural diagram of a browser according to an embodiment of the present invention;
FIG. 6 is a schematic structural diagram of another browser according to an embodiment of the present invention;
FIG. 7 is a schematic structural diagram of a server according to an embodiment of the present invention;
FIG. 8 is a schematic structural diagram of another server according to an embodiment of the present invention;
FIG. 9 is a schematic structural diagram of a system gateway of a browser according to an embodiment of the present invention; and
FIG. 10 is a schematic structural diagram of a system gateway of a server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The term "and/or" in the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

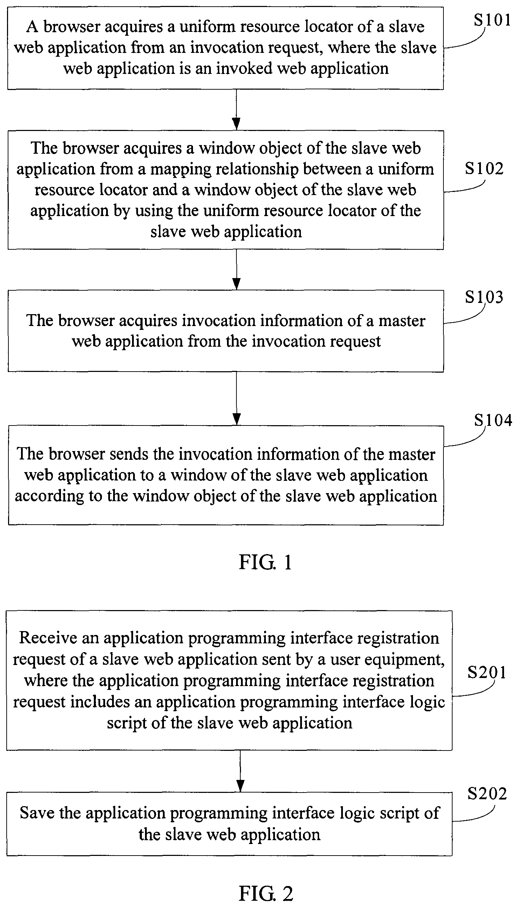

An embodiment of the present invention provides a web application interaction method that is applied to a browser. As shown in FIG. 1, the method includes the following:
S101: The browser acquires a URL (Uniform/Universal Resource Locator, uniform resource locator) of a slave web application from an invocation request, where the slave web application is an invoked web application.

It should be noted that a window object may include a window identifier, a communication type, and a specific communication channel, where the communication type may include a data sharing area, a window communication channel, a browser communication channel, or the like. The window identifier indicates a window of the slave web application in the browser; the communication type determines the specific communication channel of the slave web application; the specific communication channel indicates a communication channel used when the slave web application performs information exchange.

Specially, a web application is displayed to a user by using a window in a browser on a user equipment. In this embodiment of the present invention, when any web application is opened in the browser in any manner, a mapping relationship between a URL and a window object of the web application may be saved. If the web application is invoked, it is referred to as a slave web application; correspondingly, a web application that invokes the slave web application is referred to as a master web application in this embodiment of the present invention.

When the slave web application is invoked, the mapping relationship between a URL and a window object of the slave web application may be recorded and generated by the browser at the same time when the slave web application is opened, or may be recorded and obtained by the browser before the slave web application is invoked. Moreover, the slave web application may be opened in a programming manner by using a corresponding instruction, or may be opened by a user by manually entering a URL of the slave web application. Therefore, the invocation of the slave web application is not restricted by an opening manner of the slave web application.

Further, the browser may also delete the mapping relationship between a URL and a window object of the web application when the web application is closed or a page of the web application is switched to another web application.

S102: The browser acquires a window object of the slave web application from a mapping relationship between a URL and a window object of the slave web application by using the URL of the slave web application.

S103: The browser acquires invocation information of a master web application from the invocation request.

S104: The browser sends the invocation information of the master web application to a window of the slave web application according to the window object of the slave web application, where the master web application is a web application that invokes the slave web application.

It should be noted that when the master web application needs to invoke the slave web application, the master web application generally sends an invocation request to the slave web application. The invocation request may be sent once, and includes the URL of the slave web application and the invocation information of the master web application; the invocation request may also be sent twice, where the invocation request sent for the first time includes the URL of the slave web application, and the invocation request sent for the second time includes the invocation information of the master web application. The present invention sets no limit thereto.

In this way, because a browser stores a mapping relationship between a URL and a window object of a slave web application, when the slave web application is invoked, a corresponding window object may be acquired from the mapping relationship between a URL and a window object of the slave web application, so as to implement that a master web application invokes the slave web application. A process of saving the mapping relationship between a URL and a window object of the slave web application is not restricted by a web app opening manner; therefore, a limitation of the web app opening manner may be removed during web app interaction.

Further, when a web application does not support local interaction, that is, does not support interaction between different web applications performed in a browser, an API (Application Programming Interface, application programming interface) registration process may be used to resolve the problem. Specifically, the API registration process includes the following:

The browser sends an API registration request of the slave web application to a server, where the API registration request includes an API logic script of the slave web application, so that the server saves the API logic script of the slave web application. It should be noted that the server may also acquire the API registration request in another manner. For example, a corresponding operator manually performs registration with the server. After API registration of a web application is performed on the server, the web application becomes a web application that can be invoked, and the application is referred to as a slave web application when the application is invoked. Specially, the server is a server that provides a web application. That is, all web applications provided by the server can be invoked; therefore, the server may be referred to as a server of the slave web application.

It should be noted that the method may further include: the browser sends a domain registration request of the master web application to the server, where the domain registration request includes domain information and/or path information of the master web application, so that the server saves the domain information and/or path information included in the domain registration request. Specially, the server may also acquire the domain registration request in another manner, for example, by manually performing corresponding registration with the server. A correspondence exists between the master web application and the slave web application when domain registration is performed, that is, information about the domain registration indicates which master web applications can invoke the slave web application. The server saves the domain information and/or path information, so that, in a subsequent process in which a master web application performs program invocation on a slave web application, a master web application meeting a requirement implements invocation of a corresponding slave web application. That is, after step S104, the master web application in the browser may: send a detection request of the master web application to the server, so that the server performs matching between domain information and/or path information of the master web application carried in the detection request and the domain information and/or path information saved by the server; then, receive detection result information sent by the server, where the detection result information indicates that the matching is successful or that the matching fails. The master web application in the browser can execute invocation of a slave application only when the detection result information indicates that the matching is successful.

An embodiment of the present invention provides a web application interaction method. As shown in FIG. 2, the method includes the following:
S201: A server receives a detection request of a master web application in a browser, where the detection request is sent by the master web application and includes domain information and/or path information of the master web application.
S202: The server performs matching between the domain information and/or path information of the master web application carried in the detection request and domain information and/or path information saved by the server.
S203: The server generates detection result information according to a matching result, where the detection result information indicates that the matching is successful or that the matching fails.
S204: The server sends the detection result information to the master web application in the browser.

In this way, the server performs matching between the domain information and/or path information of the master web application carried in the detection request and the domain information and/or path information saved by the server, and sends the detection result information to a master web application in the browser, so that a master web application meeting a requirement implements invocation of a corresponding slave web application, thereby setting a permission limit to a web application that invokes the slave web application.

Further, the method may further include: the server receives an application programming interface API registration request of a slave web application sent by the browser, where the API registration request includes an API logic script of the slave web application; and the server saves the API logic script of the slave web application. In this way, by using an API registration process, a registered web application may support local interaction, that is, support interaction between different web applications in the browser.

Specially, the server may further receive a domain registration request sent by the browser, where the domain registration request includes the domain information and/or path information of the master web application; and the server saves the domain registration request that is in the domain registration request. In this way, in a subsequent process in which a master web application performs program invocation on a slave web application, a master web application meeting a requirement implements invocation of a corresponding slave web application.

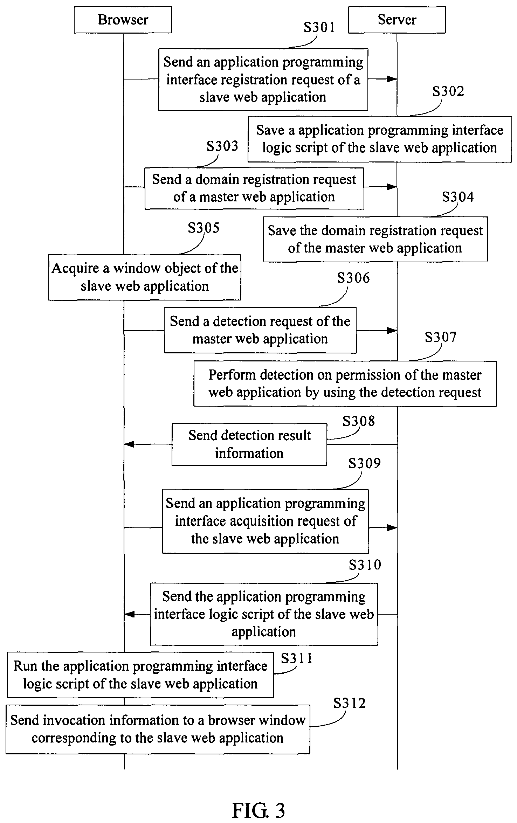

Exemplarily, an embodiment of the present invention provides a specific web application interaction method. As shown in FIG. 3, the method includes the following:

S301: A browser sends an API registration request of a slave web application to a server, where the API registration request includes an API logic script of the slave web application.

In the prior art, a web application that can be invoked is limited to a web application that has been registered in a browser on a user equipment end. However, in this embodiment of the present invention, the browser performs API registration with a server end that can provide a web application, so that any web application in an entire network can become a slave web application by performing API registration with the server end, which extends a scope of web applications that can be invoked in a web application interaction system.

Specially, for a slave web application, API registration may also be directly and manually performed on the server. This embodiment of the present invention is merely described as an example, and sets no limit thereto.

S302: The server saves the API logic script of the slave web application.

The server saves the API logic script of the slave web application, and adds reference information of the API logic script of the slave web application.

Specifically, the server may save the API logic script of the slave web application in corresponding storage space, and add the reference information of the API logic script to the slave web application. When the corresponding slave web application is invoked, the reference information may be used for querying and acquiring the corresponding API logic script. The storage space may be a particular directory of the web application or other network storage space.

S303: The browser sends a domain registration request of a master web application to the server.

The domain registration request includes domain information and/or path information of the master web application.

The domain information may include a protocol, a domain name/IP (Internet Protocol, Internet Protocol) address, a port number, and the like, and is used to identify a domain of the master web application. The path information is used to distinguish different web applications in a same domain, and the path information may identify one web application, or may include a wildcard character to identify a group of web applications. For example, "/pathname/*" represents that all web applications whose path information starts with "/pathname/" meet a requirement.

A domain registration process of the master web application aims to set a permission limit to the master web application. When the domain registration request includes only the domain information of the master web application, a slave web application can distinguish master web applications from different domains when the slave web application is invoked; when the domain registration request includes both the domain information and the path information of the master web application, a slave web application can distinguish different master web applications from a same domain when the slave web application is invoked. In an actual application, a master web application that has performed domain registration can invoke a corresponding slave web application.

S304: The server saves the domain registration request of the master web application.

The server of the slave web application saves the domain information and/or path information of the master web application included in the domain registration request. Specially, a correspondence exists between the master web application and the slave web application after the domain registration. That is, the domain registration request indicates which master web applications can invoke the slave web application. The server may correspondingly save the correspondence between the master web application and the slave web application.

S305: The browser acquires a window object of the slave web application.

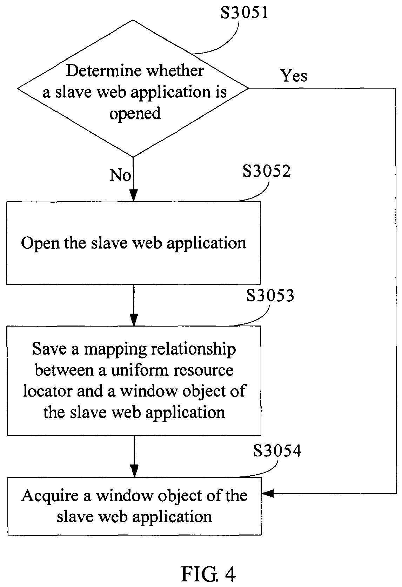

Exemplarily, when the browser acquires the window object of the slave web application, as shown in FIG. 4, the following steps are specifically included:

S3051: Determine whether the slave web application is opened. If yes, perform step S3054; if not, perform step S3052.

When the slave web application is invoked, whether a URL of the slave web application exists in a mapping relationship between a URL and a window object of the slave web application needs to be queried, so as to determine whether the slave web application is opened. A window object mapping table is queried, as shown in Table 1. If a URL record of the slave web application exists, it indicates that the slave web application is opened; if the URL of the slave web application does not exist, it indicates that the slave web application is not opened, the slave web application needs to be opened, and the mapping relationship between a URL and a window object of the slave web application needs to be saved.

S3052: Open the slave web application, and perform step S3053.

In this embodiment of the present invention, the slave web application may be opened in the browser in a programming manner by using a corresponding instruction, may be opened by another web application, or may be opened by a user by manually entering a link of the slave web application; the opening manner is not limited thereto.

S3053: Save a mapping relationship between a URL and a window object of the slave web application, and perform step S3054.

In this embodiment of the present invention, a window object mapping table may be created to store the mapping relationship between a URL and a window object of the slave web application. When the slave web application is opened, the mapping relationship between a URL and a window object of the slave web application is saved in the window object mapping table. Further, when the web application is closed or a page of the web application in the browser is switched to leave the web application, the browser deletes a corresponding mapping relationship between a URL and a window object of the web application from the window object mapping table. The window object corresponding to the slave web application may be acquired by querying the window object mapping table by using the URL.

Exemplarily, the window object mapping table may be shown in Table 1, and the window object may include a window identifier, a communication type, and a specific communication channel.

**Table 1**

| Web application URL | Window object | | |
|---|---|---|---|
| | Window identifier | Communication type | Specific communication channel |
| URL1 | Window1 | Data sharing area | "C:\" |
| URL2 | Window2 | Window communication channel | Ip2:port2 |
| URL3 | Window3 | Browser communication channel | Ip3:port3 |

The window identifier indicates a window that is opened by the slave web application, and the communication type includes a data sharing area, a window communication channel, or a browser communication channel. Different communication types correspond to different communication channels. For example, a specific communication channel corresponding to a communication type that is a data sharing area may be a particular data sharing area or the like. The particular data sharing area is shared space for web application interaction, for example, a shared disk. The shared space may be in the browser, or in a user equipment in which the browser is located, specifically, for example, "C:\", that is, the drive C of the user equipment. The present invention sets no limit thereto. A specific communication channel corresponding to a communication type that is a window communication channel may be a socket of a window or the like, which may specifically be identified in a mode of IP address plus a port number, for example, Ip2:port 2, that is, port 2 for Ip 2. A specific communication channel corresponding to a communication type that is a browser communication channel may be a socket of a browser or the like. The specific communication channel is generally determined by the communication type, and specifically, may be identified in a mode of IP address plus a port number, for example, Ip3:port 3, that is, port 3 for Ip 3.

S3054: Acquire the window object of the slave web application.

The mapping relationship between a URL and a window object of the slave web application may be acquired by querying the window object mapping table by using the URL of the slave web application, so as to acquire the window object of the slave web application, and then to acquire a corresponding window identifier, communication type, and specific communication channel.

S306: The master web application in the browser sends a detection request of the master web application to the server.

In an actual application, when the master web application invokes the slave web application, a permission limit needs to be set to the master web application. Only a master web application that has performed domain registration with the server of the slave web application can invoke the corresponding slave web application. The detection request includes the domain information and/or path information of the master web application.

S307: The server performs detection on permission of the master web application by using the detection request.

Because the server saves the domain registration request in step S304, the domain information and/or path information of the master web application in the request is correspondingly saved. The server of the slave web application may perform matching between the domain information and/or path information of the master web application carried in the detection request and the domain information and/or path information saved by the server. If domain information matching the domain information and/or path information of the master web application carried in the detection request exists in information saved by the server, the matching is successful, which indicates that the master web application carried in the detection request is a registered master web application; otherwise, it indicates that the master web application carried in the detection request is a master web application that has not been registered, and has no permission to invoke the slave web application.

Specially, the foregoing matching process is performed according to a preset rule. When the detection request includes only the domain information of the master web application, the server may perform matching between the domain information of the master web application carried in the detection request and stored domain information of each web application; when the detection request includes both the domain information and the path information of the master web application, the server may perform matching between both the domain information and the path information of the master web application carried in the detection request and stored domain information and path information of each web application, and the matching is successful only when the web applications are identical in both the domain information and the path information.

The server generates detection result information, where the detection result information indicates that the matching is successful or fails, so that the master web application in the browser performs a corresponding action according to the detection result information.

S308: The server sends detection result information to the master web application in the browser.

When the detection result information indicates that the matching is unsuccessful, the process ends.

It should be noted that in step S304, the domain information and/or path information of the registered master web application may be saved in the server, or may be written to a script of a corresponding slave web application in the server. When the script of the slave web application is downloaded to the browser, permission determining may be directly performed on the master web application in the browser. Step S306 to step S308 may be omitted. When it is determined that the master web application is a registered web application, step S309 is performed.

In this embodiment of the present invention, it is assumed that the detection result information sent by the server indicates that the matching is successful, and the following steps are performed:
S309: The master web application in the browser sends an API acquisition request of the slave web application to the server.

In step S302, the API logic script of the slave web application is saved by the server; therefore, the master web application in the browser needs to acquire the corresponding API logic script from the server.

S310: The server sends the API logic script of the slave web application to the master web application in the browser.

The slave web application in the server may acquire, from corresponding web application storage space, the API logic script of the slave web application according to the API acquisition request by using the reference information that is of the slave web application and that is corresponding to the API logic script of the slave web application, and then send the API logic script of the slave web application to the master web application in the browser.

S311: The master web application in the browser runs the API logic script of the slave web application.

The master web application in the browser runs the API logic script of the slave web application in a corresponding browser window, so as to implement that the master web application invokes the slave web application. Reference may be made to the prior art for a specific running process, and the present invention is not limited thereto.

S312: The browser sends invocation information to a window of the slave web application.

The browser obtains a communication type and a corresponding specific communication channel according to the acquired window object, and then sends the invocation information to the window of the slave web application according to the specific communication channel.

Exemplarily, when the communication type is a data sharing area, the window of the slave web application may receive the invocation information in two manners.

One manner is extracting the invocation information from the data sharing area by using the window of the slave web application, and the manner specifically includes: a window of the master web application in the browser acquires, from the window object, that the specific communication channel of the slave web application is a particular data sharing area; exemplarily, as shown in Table 1, when the URL of the slave web application is URL1, the window of the master web application in the browser acquires, from the window object, that the specific communication channel of the slave web application is "C:\"; the window of the master web application saves the invocation information of the master web application to the particular data sharing area, that is, "C:\", where the invocation information may include a target window identifier, a source window identifier, and message content, the target window identifier indicates a window, in the browser, of the slave web application to be invoked by the master web application, the source window identifier indicates the window of the master web application, and the message content indicates content that is exchanged by the master web application and the slave web application. The window of the slave web application in the browser may periodically detect the particular data sharing area, and perform matching between the target window identifier in the invocation information in the particular data sharing area and the window identifier of the slave web application. If the matching is successful, it indicates that the slave web application needs to be invoked, and the window of the slave web application in the browser may acquire the invocation information from the particular data sharing area by using the window of the slave web application.

The other manner is receiving, by registering a listening interface, information pushed by the data sharing area. It should be noted that the data sharing area provides a function of registering a listening event. The manner specifically includes: the browser registers a listening event in the data sharing area, where a listening parameter of the listening event includes the window identifier, the communication type, and the specific communication channel that are of the slave web application; a window of the master web application in the browser acquires, from the window object, that the specific communication channel of the slave web application is a particular data sharing area; the window of the master web application saves the invocation information of the master web application to the particular data sharing area, where the invocation information includes a target window identifier, a source window identifier, and message content; the window of the master web application performs matching between the window identifier of the slave web application and the target window identifier in the invocation information according to the registered listening event; and when the window identifier of the slave web application that matches the target window identifier in the invocation information exists in the particular data sharing area, a target window of the slave web application receives the invocation information sent by the particular data sharing area, or the slave web application receives a message notification sent by the particular data sharing area, and a target window acquires the invocation information according to the message notification, where the target window is a window indicated by the target window identifier, and the notification message is used to indicate that the data sharing area has new invocation information.

It should be noted that the data sharing area indicated by the specific communication channel is a specific area for data sharing, for example, a shared disk, where the area for data sharing is shared space for web application interaction, and the shared space may be in the browser or may be in the user equipment in which the browser is located, which is not limited in the present invention.

Exemplarily, when the communication type is a browser communication channel, it indicates that a registered communication type is a browser communication object when the slave web application performs API registration with the server. Web application interaction may be directly supported between browsers by extending an open information channel of the browsers. Specifically, that the window of the slave web application receives the invocation information may be:
acquiring, from the window object, that the specific communication channel of the slave web application is a particular browser communication channel, for example, Ip3:port3 in Table 1; and sending the invocation information of the master web application to a browser corresponding to the slave web application through the particular browser communication channel, and sending, by the browser corresponding to the slave web application, the invocation information to a corresponding window in the browser corresponding to the slave web application.

Specially, a process of sending the invocation information of the master web application to the corresponding window in the browser corresponding to the slave web application may be implemented by using a browser's internal mechanism in the prior art, which is not described herein again.

Exemplarily, when the communication type is a window communication channel, it indicates that a registered communication type is a window object when the slave web application performs API registration with the server. Web application interaction may be directly supported between windows in a browser by extending an open information channel of the windows in the browser. Specifically, that the window of the slave web application receives the invocation information may be:
acquiring, from the window object, that the specific communication channel of the slave web application is a particular window communication channel, for example, Ip2:port2 in Table 1; and sending the invocation information of the master web application to a corresponding window of the slave web application through the particular window communication channel.

It should be noted that a sequence of the steps of the web application interaction method provided by this embodiment of the present invention may be adjusted appropriately, and a step may also be correspondingly added or removed according to a condition. Any person skilled in the art may readily figure out modified methods without departing from the technical scope disclosed in the present invention, and therefore, details are not described herein again.

Exemplarily, in this embodiment, it is assumed that a web application web app-requester needs to invoke a web application web app-invoked, that is, web app-requester is a master web application, and web app-invoked is a slave web application. A specific process is exemplified as follows:

First, a server receives an API registration request of web app-invoked, where an API logic script in the API registration request is as follows:

```
          window.onmessage = function(e){
          var msg = e.data;
          deal with msg;
          e.source.postMessage(msg);
           }
```

The server extracts the API logic script of the slave web application from the received API registration request, and saves the API logic script, as a stored file file.js, in corresponding network storage space. Exemplarily, in this embodiment, the API logic script may be saved in a particular directory of the web application, for example, in a directory whose name is "web app". Reference to the file file.js is added to an html (Hypertext Markup Language, Hypertext Markup Language) file in the "web app" directory, and the API logic script of web app-invoked may be queried and obtained by using the reference. For example, the following is added to the html file:

```
          <script type="text/javascript" src="file.js"></script>
```

By using the foregoing registration manner, API processing logic of web app-invoked is added to a server side, so that web app-invoked supports message exchange in a browser.

Then, the server receives a domain registration request of web app-requester, where the domain registration request may include domain information and path information of web app-requester.

Exemplarily, the domain information may be "http://www.apprequester.com:8080", and the path information may be "/requester".

The server registers and saves the domain information and the path information of web app-invoked, and saves a correspondence between web app-invoked and web app-requester for subsequent invocation. Meanwhile, the server may add, to the saved API logic script, logic for detecting the domain information and the path information of web app-requester, so that when web app-requester invokes web app-invoked later, the server performs detection on permission of web app-requester. For example:

```
          window.onmessage = function(e){
          if(checkOriginPath() == false)
                return;
          var msg = e.data;
                deal with msg;
                e.source.postMessage(msg);
          }
```

The foregoing process is a process in which the domain information and the path information of web app-requester are registered on the server side.

Specifically, whether web app-requester has access permission is detected first; then, a corresponding message is sent to web app-invoked, to prevent web app-invoked from being randomly invoked in the browser.

Specially, the foregoing step of adding, to the saved API logic script, the logic for detecting the domain information and the path information of web app-invoked is an optional step. In an actual application, a process of detecting the domain information and the path information may also be completed by a preset apparatus in a web application interaction system.

When web app-invoked is opened in the browser by using a URL "http://www.appprovider.com:8080/invoked" of web app-invoked, assuming that a window identifier of web app-invoked is "Wininvoked", a supported communication type is "data sharing area", and a specific communication channel is "C:\share", the browser correspondingly records, in a window object mapping table, a mapping relationship between the URL and a window object, which is specifically shown in Table 2.

**Table 2**

| Web application URL | Window object | | |
|---|---|---|---|
| | Window identifier | Communication type | Specific communication channel |
| http://www.appprovider.com: 8080/invoked | Wininvoked | Data sharing area | C:\share |

When web app-requester invokes web app-invoked, the browser queries the window object mapping table for the window object of web app-invoked by using the URL "http://www.appprovider.com:8080/invoked" of the invoked web application web app-invoked, so as to obtain that the corresponding window identifier is "Wininvoked", the communication type is "data sharing area", and the specific communication channel is "C:\share".

Web app-requester may write invocation information into "C:\share" according to the communication type "data sharing area", where the invocation information specifically includes a target window identifier "Wininvoked", a source window identifier "WinRequester", and message content, and in addition, may further include the domain information "http://www.apprequester.com:8080" and the path information "/requester" of web app-requester.

The browser may periodically detect whether the target window identifier "Wininvoked" exists in the data sharing area "C:\share", and when a corresponding record is found, the browser detects domain information and path information in the record, and finds that a record of "http://www.apprequester.com:8080" and "/requester" exists. Then, the master web application in the browser acquires the corresponding API logic script by sending an API acquisition request of web app-invoked to the server, and then the API logic script is sent to the corresponding master web application in the browser for running the API logic script.

According to the web application interaction method provided by this embodiment of the present invention, because a browser saves a mapping relationship between a URL and a window object of a slave web application when the slave web application is opened, when the slave web application is invoked, a corresponding window object may be acquired from the mapping relationship between a URL and a window object of the slave web application, so as to implement that a master web application invokes the slave web application. A process of saving the mapping relationship between a URL and a window object of the slave web application is not restricted by a web app opening manner; therefore, a limitation of the web app opening manner may be removed during web app interaction. Moreover, a server performs matching between domain information and/or path information of the master web application carried in a detection request and domain information and/or path information saved by the server, and sends detection result information to a master web application in the browser, so that a master web application meeting a requirement implements invocation of a corresponding slave web application, thereby setting a permission limit to a web application that invokes the slave web application.

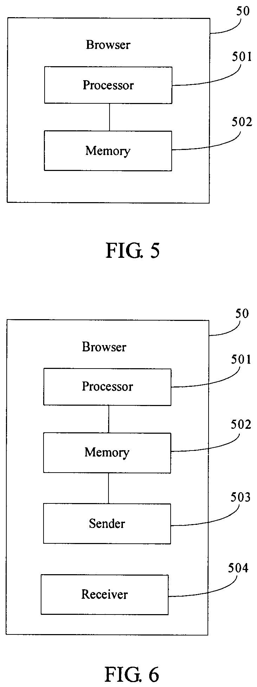

An embodiment of the present invention provides a browser 50. As shown in FIG. 5, the browser includes a processor 501 and a memory 502.

The processor 501 is configured to acquire a uniform resource locator URL of a slave web application from an invocation request, where the slave web application is an invoked web application.

It should be noted that a window object may include a window identifier, a communication type, and a specific communication channel, where the communication type may include a data sharing area, a window communication channel, a browser communication channel, or the like. The window identifier indicates a window of the slave web application in the browser; the communication type determines the specific communication channel of the slave web application; the specific communication channel indicates a communication channel used when the slave web application performs information exchange.

Specially, a web application is displayed to a user by using a window in a browser on a user equipment. In this embodiment of the present invention, when any web application is opened in the browser in any manner, a mapping relationship between a URL and a window object of the web application may be saved. If the web application is invoked, it is referred to as a slave web application; correspondingly, a web application that invokes the slave web application is referred to as a master web application in this embodiment of the present invention. When the slave web application is invoked, the mapping relationship between a URL and a window object of the slave web application may be recorded and generated by the browser at the same time when the slave web application is opened, or may be recorded and obtained by the browser before the slave web application is invoked. Moreover, the slave web application may be opened in a programming manner by using a corresponding instruction, or may be opened by a user by manually entering a link of the slave web application. Therefore, the invocation of the slave web application is not restricted by an opening manner of the slave web application.

The memory 502 is configured to acquire a window object of the slave web application from the mapping relationship between a URL and a window object of a slave web application by using the URL of the slave web application.

The processor 501 is further configured to acquire invocation information of a master web application from the invocation request.

The processor 501 is further configured to send the invocation information of the master web application to a window of the slave web application according to the window object of the slave web application, where the master web application is a web application that invokes the slave web application.

In this way, because the memory stores the mapping relationship between a URL and a window object of the slave web application, when the slave web application is invoked, the processor may acquire a corresponding window object from the mapping relationship between a URL and a window object of the slave web application, so as to implement that the master web application invokes the slave web application. A process of saving the mapping relationship between a URL and a window object of the slave web application is not restricted by a web app opening manner; therefore, a limitation of the opening manner may be removed during web app interaction.

Further, when a web application does not support local interaction, that is, does not support interaction between different web applications performed in a browser, an API (Application Programming Interface, application programming interface) registration process may be used to resolve the problem. Specifically, as shown in FIG. 6, the browser further includes a sender 503, configured to send an application programming interface API registration request of the slave web application to a server, where the API registration request includes an API logic script of the slave web application, so that the server saves the API logic script of the slave web application. It should be noted that the server may also acquire the API registration request in another manner. For example, a corresponding operator manually performs registration with the server.

The sender 503 is further configured to send a domain registration request of the master web application to the server, where the domain registration request includes domain information and/or path information of the master web application, so that the server saves the domain information and/or path information included in the domain registration request.

Specially, a correspondence exists between the master web application and the slave web application when domain registration is performed, that is, information about the domain registration indicates which master web applications can invoke the slave web application. The server saves the domain information and/or path information, so that in a subsequent process in which a master web application performs program invocation on a slave web application, a master web application meeting a requirement implements invocation of a corresponding slave web application.

In the prior art, a web application that can be invoked is limited to a web application that has been registered in a browser on a user equipment end. However, in this embodiment of the present invention, the sender of the browser performs API registration with a server end that can provide a web application, so that any web application in an entire network can become a slave web application by performing API registration with the server end, which extends a scope of web applications that can be invoked in a web application interaction system.

The sender 503 is further configured to send a detection request of the master web application to the server, so that the server performs matching between domain information and/or path information of the master web application carried in the detection request and the domain information and/or path information saved by the server.

Specially, as shown in FIG. 6, the browser 50 further includes:
a receiver 504, configured to receive detection result information sent by the server. It should be noted that, the master web application in the browser can execute invocation of a slave application only when the detection result information indicates that the matching is successful.

The sender 503 is further configured to send an API acquisition request of the slave web application to the server. Correspondingly, the slave web application in the server may acquire, from corresponding web application storage space, the API logic script of the slave web application according to the API acquisition request by using reference information that is of the slave web application and that is corresponding to the API logic script of the slave web application, and then send the API logic script of the slave web application to the master web application in the browser.

The receiver 504 is further configured to receive the API logic script of the slave web application sent by the server.

The processor 501 is further configured to run the API logic script of the slave web application.

The processor 501 is further configured to:
extract invocation information from the data sharing area by using the window of the slave web application, including: when the communication type is the data sharing area, acquiring, by a window of the master web application from the window object, that the specific communication channel of the slave web application is a particular data sharing area; saving, by the window of the master web application, the invocation information of the master web application to the particular data sharing area, where the invocation information includes a target window identifier, a source window identifier, and message content; performing matching, by the window of the slave web application, between the target window identifier in the invocation information in the particular data sharing area and the window identifier of the slave web application; and if the matching is successful, acquiring the invocation information from the particular data sharing area by using the window of the slave web application; or
receive, by registering a listening interface, information pushed by the data sharing area. It should be noted that the data sharing area provides a function of registering a listening event, specifically including: registering a listening event in the data sharing area, where a listening parameter of the listening event includes the window identifier, the communication type, and the specific communication channel that are of the slave web application; acquiring, by a window of the master web application from the window object, that the specific communication channel of the slave web application is a particular data sharing area; saving, by the window of the master web application, the invocation information of the master web application to the particular data sharing area, where the invocation information includes a target window identifier, a source window identifier, and message content; performing matching, by the window of the master web application, between the window identifier of the slave web application and the target window identifier in the invocation information according to the registered listening event; and when the window identifier of the slave web application that matches the target window identifier in the invocation information exists in the particular data sharing area, receiving, by a target window of the slave web application, the invocation information sent by the particular data sharing area, or receiving, by the slave web application, a message notification sent by the particular data sharing area, and acquiring, by a target window, the invocation information according to the message notification, where the target window is a window indicated by the target window identifier.

The master web application in the browser runs the API logic script of the slave web application in a corresponding browser window, so as to implement that the master web application invokes the slave web application. Reference may be made to the prior art for a specific running process, the present invention is not limited thereto.

When the communication type is the browser communication channel, the processor 501 may be configured to:
acquire, from the window object, that the specific communication channel of the slave web application is a particular browser communication channel; and send the invocation information of the master web application to a browser corresponding to the slave web application through the particular browser communication channel, and send, by the browser corresponding to the slave web application, the invocation information to a corresponding window in the browser corresponding to the slave web application.

The processor 501 may be further configured to:
acquire, from the window object, that the specific communication channel of the slave web application is a particular window communication channel; and send the invocation information of the master web application to a corresponding window of the slave web application through the particular window communication channel.

It may be clearly understood by a person skilled in the art that, for the purpose of convenient and brief description, for specific steps in modules of the browser described above, reference may be made to a corresponding process in the foregoing web application interaction method embodiments, and details are not described herein again.

According to the browser provided by this embodiment of the present invention, because a memory stores a mapping relationship between a URL and a window object of a slave web application, when the slave web application is invoked, a processor may acquire a corresponding window object from the mapping relationship between a URL and a window object of the slave web application, so as to implement that a master web application invokes the slave web application. A process of saving the mapping relationship between a URL and a window object of the slave web application is not restricted by a web app opening manner; therefore, a limitation of the opening manner may be removed during web app interaction.

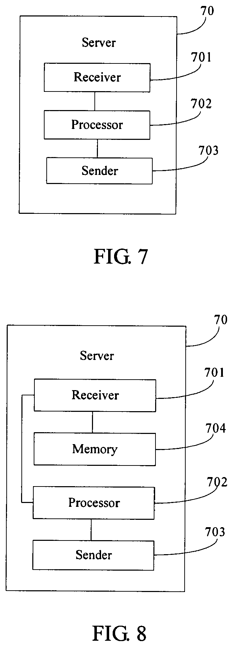

An embodiment of the present invention provides a server 70. As shown in FIG. 7, the server includes:
a receiver 701, configured to receive a detection request of a master web application in a browser, where the detection request is sent by the master web application and includes domain information and/or path information of the master web application;
a processor 702, configured to perform matching between the domain information and/or path information of the master web application carried in the detection request and domain information and/or path information saved by a server, where:
   the processor 702 is further configured to generate detection result information according to a matching result, where the detection result information indicates that the matching is successful or that the matching fails; and
   a sender 703, configured to send the detection result information to the master web application in the browser.

In this way, the processor performs matching between the domain information and/or path information of the master web application carried in the detection request received by the receiver and the domain information and/or path information saved by the server, and the sender sends the detection result information to a master web application in the browser, so that a master web application meeting a requirement implements invocation of a corresponding slave web application, thereby setting a permission limit to a web application that invokes the slave web application.

Further, the receiver 701 is further configured to receive an application programming interface API registration request of a slave web application sent by the browser, where the API registration request includes an API logic script of the slave web application.

As shown in FIG. 8, the server 70 further includes:
a memory 704, configured to save the API logic script of the slave web application.

The receiver 701 is further configured to receive a domain registration request of the master web application, where the domain registration request includes the domain information and/or path information of the master web application.

The memory 704 is further configured to save the domain information and/or path information included in the domain registration request.

The receiver 701 is further configured to receive an API acquisition request of the slave web application sent by the browser.

The sender 703 is further configured to send the API logic script of the slave web application to the master web application in the browser, so that the master web application in the browser runs the API logic script of the slave web application.

It may be clearly understood by a person skilled in the art that, for the purpose of convenient and brief description, for specific steps in modules of the server described above, reference may be made to a corresponding process in the foregoing web application interaction method embodiments, and details are not described herein again.

According to the server provided by this embodiment of the present invention, a processor performs matching between domain information and/or path information of a master web application carried in a detection request received by a receiver and domain information and/or path information saved by the server, and a sender sends detection result information to a master web application in the browser, so that a master web application meeting a requirement implements invocation of a corresponding slave web application, thereby setting a permission limit to a web application that invokes the slave web application.

An embodiment of the present invention provides a web application interaction system, including: any browser provided by the embodiments of the present invention, and any server provided by the embodiments of the present invention.

The browser is configured to: acquire a uniform resource locator URL of a slave web application from an invocation request, where the slave web application is an invoked web application; acquire a window object of the slave web application from a mapping relationship between a URL and a window object of a slave web application by using the URL of the slave web application; acquire invocation information of a master web application from the invocation request; and send the invocation information of the master web application to a window of the slave web application according to the window object of the slave web application, where the master web application is a web application that invokes the slave web application.

The server is configured to: receive a detection request of the master web application in the browser, where the detection request is sent by the master web application and includes domain information and/or path information of the master web application; perform matching between the domain information and/or path information of the master web application carried in the detection request and domain information and/or path information saved by the server; generate detection result information according to a matching result, where the detection result information indicates that the matching is successful or that the matching fails; and send the detection result information to the master web application in the browser.

According to the web application interaction system provided by this embodiment of the present invention, because a browser stores a mapping relationship between a URL and a window object of a slave web application, when the slave web application is invoked, a corresponding window object may be acquired from the mapping relationship between a URL and a window object of the slave web application, so as to implement that a master web application invokes the slave web application. A process of saving the mapping relationship between a URL and a window object of the slave web application is not restricted by a web app opening manner; therefore, a limit of the web app opening manner may be removed during web app interaction.

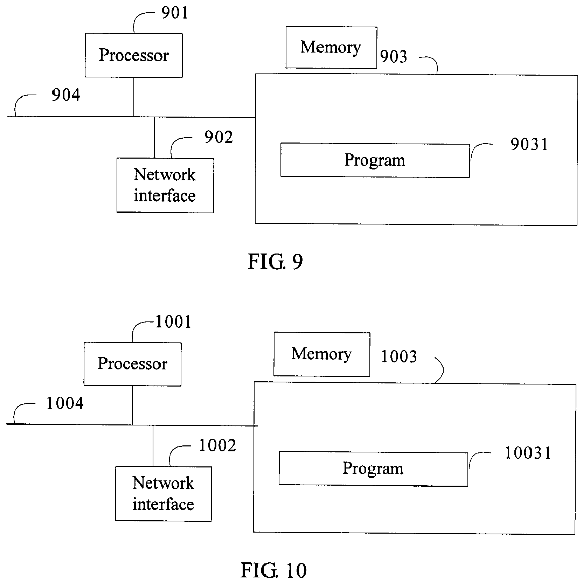

FIG. 9 describes a structure of a system gateway of a browser provided by another embodiment of the present invention, which includes at least one processor 901 (for example, a CPU), at least one network interface 902 or another communications interface, a memory 903, and at least one communications bus 904 that is used for implementing connections and communication between these apparatuses. The processor 901 is configured to execute an executable module stored in the memory 903, for example, a computer program. The memory 903 may include a high-speed random access memory (RAM: Random Access Memory), and may further include a non-volatile memory (non-volatile memory), such as at least one magnetic disk memory. The at least one network interface 902 (which may be wired or wireless) may implement a communication connection between the system gateway of the browser and at least one another network element by using the web, a wide area network, a local area network, a metropolitan area network, or the like.

In some implementation manners, the memory 903 stores a program 9031, where the program 9031 may be executed by the processor 901, and the program 9031 includes:
acquiring a uniform resource locator URL of a slave web application from an invocation request, where the slave web application is an invoked web application.

It should be noted that a window object may include a window identifier, a communication type, and a specific communication channel, where the communication type may include a data sharing area, a window communication channel, a browser communication channel, or the like. The window identifier indicates a window of the slave web application in the browser; the communication type determines the specific communication channel of the slave web application; the specific communication channel indicates a communication channel used when the slave web application performs information exchange.

Specially, a web application is displayed to a user by using a window in a browser on a user equipment. In this embodiment of the present invention, when any web application is opened in the browser in any manner, the program 9031 may save a mapping relationship between a URL and a window object of the web application. If the web application is invoked, it is referred to as a slave web application; correspondingly, a web application that invokes the slave web application is referred to as a master web application in this embodiment of the present invention. When the slave web application is invoked, the mapping relationship between a URL and a window object of the slave web application may be recorded and generated by the browser at the same time when the slave web application is opened, or may be recorded and obtained by the browser before the slave web application is invoked. Moreover, the slave web application may be opened in a programming manner by using a corresponding instruction, or may be opened by a user by manually entering a link of the slave web application. Therefore, the invocation of the slave web application is not restricted by an opening manner of the slave web application.

Further, the program 9031 may also delete the mapping relationship between a URL and a window object of the web application when the web application is closed or a page of the web application is switched to another web application.

A window object of the slave web application is acquired from a mapping relationship between a URL and a window object of the slave web application by using the URL of the slave web application.

Invocation information of a master web application is acquired from the invocation request.

The invocation information of the master web application is sent to a window of the slave web application according to the window object of the slave web application, where the master web application is a web application that invokes the slave web application.

After the acquiring a uniform resource locator URL of a slave web application from an invocation request, the program 9031 further includes:
querying, in the mapping relationship between a URL and a window object of the slave web application, whether the URL of the slave web application exists; and
if the URL of the slave web application does not exist, opening the slave web application and saving a mapping relationship between the URL and the window object of the slave web application.

The window object includes a window identifier, a communication type, and a specific communication channel.

The communication type includes a data sharing area, a window communication channel, or a browser communication channel.

Before the acquiring a uniform resource locator URL of a slave web application from an invocation request, the program 9031 further includes:
sending an application programming interface API registration request of the slave web application to a server, where the API registration request includes an API logic script of the slave web application, so that the server returns the API logic script of the slave web application to the master web application after receiving an API acquisition request of the slave web application.

Before the acquiring a uniform resource locator URL of a slave web application from an invocation request, the program 9031 further includes:
sending a domain registration request of the master web application to the server, where the domain registration request includes domain information and/or path information of the master web application, so that the server saves the domain information and/or path information included in the domain registration request.

After the acquiring the invocation information of a master web application from the invocation request, the program 9031 further includes:
sending a detection request of the master web application to the server, so that the server performs matching between domain information and/or path information of the master web application carried in the detection request and the domain information and/or path information saved by the server; and
receiving detection result information sent by the server.

After the detection result information indicates that the matching is successful, the program 9031 further includes:
sending the API acquisition request of the slave web application to the server;
receiving the API logic script of the slave web application sent by the server; and
running the API logic script of the slave web application.

When the communication type is a data sharing area, the sending the invocation information of the master web application to a window of the slave web application according to the window object of the slave web application includes:
acquiring, by a window of the master web application from the window object, that the specific communication channel of the slave web application is a particular data sharing area;
saving, by the window of the master web application, the invocation information of the master web application to the particular data sharing area, where the invocation information includes a target window identifier, a source window identifier, and message content;
performing matching, by the window of the slave web application, between the target window identifier in the invocation information in the particular data sharing area and the window identifier of the slave web application; and
if the matching is successful, acquiring the invocation information from the particular data sharing area by using the window of the slave web application.

When the communication type is a data sharing area, the sending the invocation information of the master web application to a window of the slave web application according to the window object of the slave web application includes:
registering a listening event in the data sharing area, where a listening parameter of the listening event includes the window identifier, the communication type, and the specific communication channel that are of the slave web application;
acquiring, by a window of the master web application from the window object, that the specific communication channel of the slave web application is a particular data sharing area;
saving, by the window of the master web application, the invocation information of the master web application to the particular data sharing area, where the invocation information includes a target window identifier, a source window identifier, and message content;
performing matching, by the window of the master web application, between the window identifier of the slave web application and the target window identifier in the invocation information according to the registered listening event; and
when the window identifier of the slave web application that matches the target window identifier in the invocation information exists in the particular data sharing area, receiving, by a target window of the slave web application, the invocation information sent by the particular data sharing area; or
receiving, by the slave web application, a message notification sent by the particular data sharing area, and acquiring, by a target window, the invocation information according to the message notification, where the target window is a window indicated by the target window identifier.

When the communication type is a browser communication channel, the sending the invocation information of the master web application to a window of the slave web application according to the window object of the slave web application includes:
acquiring, from the window object, that the specific communication channel of the slave web application is a particular browser communication channel; and
sending the invocation information of the master web application to a browser corresponding to the slave web application through the particular browser communication channel, and sending, by the browser corresponding to the slave web application, the invocation information to a corresponding window in the browser corresponding to the slave web application.

When the communication type is a window communication channel, the sending the invocation information of the master web application to a window of the slave web application according to the window object of the slave web application includes:
acquiring, from the window object, that the specific communication channel of the slave web application is a particular window communication channel; and
sending the invocation information of the master web application to a corresponding window of the slave web application through the particular window communication channel.

It may be clearly understood by a person skilled in the art that, for the purpose of convenient and brief description, for specific steps in the program 9031 described above, reference may be made to a corresponding process in the foregoing web application interaction method embodiments, and details are not described herein again.

According to the structure of a system gateway of a browser provided by this embodiment, because a program stored in a memory stores a mapping relationship between a URL and a window object of a slave web application when the slave web application is opened, when the slave web application is invoked, a corresponding window object may be acquired from the mapping relationship between a URL and a window object of the slave web application, so as to implement that a master web application invokes the slave web application. A process of saving the mapping relationship between a URL and a window object of the slave web application is not restricted by a web app opening manner; therefore, a limitation of the web app opening manner may be removed during web app interaction.

FIG. 10 describes a structure of a system gateway of a server provided by another embodiment of the present invention, which includes at least one processor 1001 (for example, a CPU), at least one network interface 1002 or another communications interface, a memory 1003, and at least one communications bus 1004 that is used for implementing connections and communication between these apparatuses. The processor 1001 is configured to execute an executable module stored in the memory 1003, for example, a computer program. The memory 1003 may include a high-speed random access memory, and may further include a non-volatile memory, such as at least one magnetic disk memory. The at least one network interface 1002 (which may be wired or wireless) may implement a communication connection between the system gateway of the server and at least one another network element by using the Internet, a wide area network, a local area network, a metropolitan area network, or the like.

In some implementation manners, the memory 1003 stores a program 10031, where the program 10031 may be executed by the processor 1001, and the program 10031 includes:
receiving a detection request of a master web application in a browser, where the detection request is sent by the master web application and includes domain information and/or path information of the master web application;
performing matching between the domain information and/or path information of the master web application carried in the detection request and domain information and/or path information saved by the server;
generating detection result information according to a matching result, where the detection result information indicates that the matching is successful or that the matching fails; and
sending the detection result information to the master web application in the browser.

The program 10031 further includes: receiving an application programming interface API registration request of a slave web application, where the API registration request includes an API logic script of the slave web application; and
saving the API logic script of the slave web application.

The program 10031 further includes: receiving a domain registration request of the master web application, where the domain registration request includes the domain information and/or path information of the master web application; and
saving the domain information and/or path information included in the domain registration request.

After the matching is successful, the program 10031 further includes:
receiving an API acquisition request of the slave web application sent by the master web application in the browser; and
sending the API logic script of the slave web application to the master web application in the browser, so that the master web application in the browser runs the API logic script of the slave web application.

It may be clearly understood by a person skilled in the art that, for the purpose of convenient and brief description, for specific steps in the program 10031 described above, reference may be made to a corresponding process in the foregoing web application interaction method embodiments, and details are not described herein again.

According to the structure of a system gateway of a server provided by this embodiment, a program stored in the server performs matching between domain information and/or path information of a master web application carried in a detection request and domain information and/or path information saved by the server, and sends detection result information to a master web application in a browser, so that a master web application meeting a requirement implements invocation of a corresponding slave web application, thereby setting a permission limit to a web application that invokes the slave web application.

It may be clearly understood by a person skilled in the art that, for the purpose of convenient and brief description, for a detailed working process of the foregoing system, apparatus, and module, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected according to actual requirements to achieve the objectives of the solutions of the embodiments.

In addition, functional modules in the embodiments of the present invention may be integrated into one processing module, or each of the modules may exist alone physically, or two or more modules are integrated into one module. The integrated module may be implemented in a form of hardware, or may be implemented in a form of hardware in addition to a software functional module.

Further embodiments of the present invention are provided in the following. It should be noted that the numbering used in the following section does not necessarily need to comply with the numbering used in the previous sections.
Embodiment 1. A web application interaction method, comprising:
   acquiring a uniform resource locator URL of a slave web application from an invocation request, wherein the slave web application is an invoked web application;
   acquiring a window object of the slave web application from a mapping relationship between a URL and a window object of the slave web application by using the URL of the slave web application;
   acquiring invocation information of a master web application from the invocation request; and
   sending the invocation information of the master web application to a window of the slave web application according to the window object of the slave web application, wherein the master web application is a web application that invokes the slave web application.
Embodiment 2. The method according to embodiment 1, wherein after the acquiring a uniform resource locator URL of a slave web application from an invocation request, the method further comprises:
   querying, in the mapping relationship between a URL and a window object of the slave web application, whether the URL of the slave web application exists; and
   if the URL of the slave web application does not exist, opening the slave web application and saving a mapping relationship between the URL and the window object of the slave web application.
Embodiment 3. The method according to embodiment 1 or 2, wherein:
   the window object comprises a window identifier, a communication type, and a specific communication channel; and
   the communication type comprises a data sharing area, a window communication channel, or a browser communication channel.
Embodiment 4. The method according to any one of embodiments 1 to 3, wherein before the acquiring a uniform resource locator URL of a slave web application from an invocation request, the method further comprises:
   sending an application programming interface API registration request of the slave web application to a server, wherein the API registration request comprises an API logic script of the slave web application, so that the server returns the API logic script of the slave web application to the master web application after receiving an API acquisition request of the slave web application.
Embodiment 5. The method according to embodiment 4, wherein before the acquiring a uniform resource locator URL of a slave web application from an invocation request, the method further comprises:
   sending a domain registration request of the master web application to the server, wherein the domain registration request comprises domain information and/or path information of the master web application, so that the server saves the domain information and/or path information comprised in the domain registration request.
Embodiment 6. The method according to embodiment 5, wherein after the acquiring invocation information of a master web application from the invocation request, the method further comprises:
   sending a detection request of the master web application to the server, so that the server performs matching between domain information and/or path information of the master web application carried in the detection request and the domain information and/or path information saved by the server; and
   receiving detection result information sent by the server, wherein the detection result information carries matching result information.
Embodiment 7. The method according to embodiment 6, wherein after the detection result information indicates that the matching is successful, the method further comprises:
   sending the API acquisition request of the slave web application to the server;
   receiving the API logic script of the slave web application sent by the server; and
   running the API logic script of the slave web application.
Embodiment 8. The method according to any one of embodiments 3 to 7, wherein when the communication type is a data sharing area, the sending the invocation information of the master web application to a window of the slave web application according to the window object of the slave web application comprises:
   acquiring, by a window of the master web application from the window object, that the specific communication channel of the slave web application is a particular data sharing area;
   saving, by the window of the master web application, the invocation information of the master web application to the particular data sharing area, wherein the invocation information comprises a target window identifier, a source window identifier, and message content;
   performing matching, by the window of the slave web application, between the target window identifier in the invocation information in the particular data sharing area and the window identifier of the slave web application; and
   if the matching is successful, acquiring the invocation information from the particular data sharing area by using the window of the slave web application.
Embodiment 9. The method according to any one of embodiments 3 to 7, wherein when the communication type is a data sharing area, the sending the invocation information of the master web application to a window of the slave web application according to the window object of the slave web application comprises:
   registering a listening event in the data sharing area, wherein a listening parameter of the listening event comprises the window identifier, the communication type, and the specific communication channel that are of the slave web application;
   acquiring, by a window of the master web application from the window object, that the specific communication channel of the slave web application is a particular data sharing area;
   saving, by the window of the master web application, the invocation information of the master web application to the particular data sharing area, wherein the invocation information comprises a target window identifier, a source window identifier, and message content;
   performing matching, by the window of the master web application, between the window identifier of the slave web application and the target window identifier in the invocation information according to the registered listening event; and
   when the window identifier of the slave web application that matches the target window identifier in the invocation information, receiving, by a target window of the slave web application, the invocation information sent by the particular data sharing area; or
   receiving, by the slave web application, a message notification sent by the particular data sharing area, and acquiring, by a target window, the invocation information according to the message notification, wherein the target window is a window indicated by the target window identifier.
Embodiment 10. The method according to any one of embodiments 3 to 7, wherein when the communication type is a browser communication channel, the sending the invocation information of the master web application to a window of the slave web application according to the window object of the slave web application comprises:
   acquiring, from the window object, that the specific communication channel of the slave web application is a particular browser communication channel; and
   sending the invocation information of the master web application to a browser corresponding to the slave web application through the particular browser communication channel, and sending, by the browser corresponding to the slave web application, the invocation information to a corresponding window in the browser corresponding to the slave web application.
Embodiment 11. The method according to any one of embodiments 3 to 7, wherein when the communication type is a window communication channel, the sending the invocation information of the master web application to a window of the slave web application according to the window object of the slave web application comprises:
   acquiring, from the window object, that the specific communication channel of the slave web application is a particular window communication channel; and
   sending the invocation information of the master web application to a corresponding window of the slave web application through the particular window communication channel.
Embodiment 12. A web application interaction method, comprising:
   receiving a detection request of a master web application in a browser, wherein the detection request is sent by the master web application and comprises domain information and/or path information of the master web application;
   performing matching between the domain information and/or path information of the master web application carried in the detection request and domain information and/or path information saved by a server;
   generating detection result information according to a matching result, wherein the detection result information indicates that the matching is successful or that the matching fails; and
   sending the detection result information to the master web application in the browser.
Embodiment 13. The method according to embodiment 12, wherein the method further comprises:
   receiving an application programming interface API registration request of a slave web application sent by the browser, wherein the API registration request comprises an API logic script of the slave web application; and
   saving the API logic script of the slave web application.
Embodiment 14. The method according to embodiment 12 or 13, wherein the method further comprises:
   receiving a domain registration request of the master web application, wherein the domain registration request comprises the domain information and/or path information of the master web application; and
   saving the domain information and/or path information comprised in the domain registration request.
Embodiment 15. The method according to embodiment 14, wherein after the matching is successful, the method further comprises:
   receiving an API acquisition request of the slave web application sent by the browser; and
   sending the API logic script of the slave web application to the master web application in the browser, so that the master web application in the browser runs the API logic script of the slave web application.
Embodiment 16. A browser, comprising:
   a processor, configured to acquire a uniform resource locator URL of a slave web application from an invocation request, wherein the slave web application is an invoked web application; and
   a memory, configured to acquire a window object of the slave web application from a mapping relationship between a URL and a window object of the slave web application by using the URL of the slave web application, wherein:
      the processor is further configured to acquire invocation information of a master web application from the invocation request; and
      the processor is further configured to send the invocation information of the master web application to a window of the slave web application according to the window object of the slave web application, wherein the master web application is a web application that invokes the slave web application.
Embodiment 17. The browser according to embodiment 16, wherein the processor is further configured to:
   query, in the mapping relationship between a URL and a window object of the slave web application, whether the URL of the slave web application exists; and
   if the URL of the slave web application does not exist, open the slave web application and save a mapping relationship between the URL and the window object of the slave web application.
Embodiment 18. The browser according to embodiment 16 or 17, wherein:
   the window object comprises a window identifier, a communication type, and a specific communication channel; and
   the communication type comprises a data sharing area, a window communication channel, or a browser communication channel.
Embodiment 19. The browser according to any one of embodiments 16 to 18, wherein the browser further comprises:
   a sender, configured to send an application programming interface API registration request of the slave web application to a server, wherein the API registration request comprises an API logic script of the slave web application, so that the server returns the API logic script of the slave web application to the master web application after receiving an API acquisition request of the slave web application.
Embodiment 20. The browser according to embodiment 19, wherein:
   the sender is further configured to send a domain registration request of the master web application to the server, wherein the domain registration request comprises domain information and/or path information of the master web application, so that the server saves the domain information and/or path information comprised in the domain registration request.
Embodiment 21. The browser according to embodiment 20, wherein:
   the sender is further configured to send a detection request of the master web application to the server, so that the server performs matching between domain information and/or path information of the master web application carried in the detection request and the domain information and/or path information saved by the server; and
   the browser further comprises:
      a receiver, configured to receive detection result information sent by the server.
Embodiment 22. The browser according to embodiment 21, wherein:
   the sender is further configured to send the API acquisition request of the slave web application to the server;
   the receiver is further configured to receive the API logic script of the slave web application sent by the server; and
   the processor is further configured to run the API logic script of the slave web application.
Embodiment 23. The browser according to any one of embodiments 18 to 22, wherein when the communication type is a data sharing area, the processor is specifically configured to:
   acquire, by a window of the master web application from the window object, that the specific communication channel of the slave web application is a particular data sharing area;
   save, by the window of the master web application, the invocation information of the master web application to the particular data sharing area, wherein the invocation information comprises a target window identifier, a source window identifier, and message content;
   perform matching, by the window of the slave web application, between the target window identifier in the invocation information in the particular data sharing area and the window identifier of the slave web application; and
   if the matching is successful, acquire the invocation information from the particular data sharing area by using the window of the slave web application.
Embodiment 24. The browser according to any one of embodiments 18 to 22, wherein when the communication type is a data sharing area, the processor is specifically configured to:
   register a listening event in the data sharing area, wherein a listening parameter of the listening event comprises the window identifier, the communication type, and the specific communication channel that are of the slave web application;
   acquire, by a window of the master web application from the window object, that the specific communication channel of the slave web application is a particular data sharing area;
   save, by the window of the master web application, the invocation information of the master web application to the particular data sharing area, wherein the invocation information comprises a target window identifier, a source window identifier, and message content;
   perform matching, by the window of the master web application, between the window identifier of the slave web application and the target window identifier in the invocation information according to the registered listening event; and
   when the window identifier of the slave web application that matches the target window identifier in the invocation information exists in the particular data sharing area, receive, by a target window of the slave web application, the invocation information sent by the particular data sharing area; or
   receive, by the slave web application, a message notification sent by the particular data sharing area, and acquire, by a target window, the invocation information according to the message notification, wherein the target window is a window indicated by the target window identifier.
Embodiment 25. The browser according to any one of embodiments 18 to 22, wherein when the communication type is a browser communication channel, the processor is specifically configured to:
   acquire, from the window object, that the specific communication channel of the slave web application is a particular browser communication channel; and
   send the invocation information of the master web application to a browser corresponding to the slave web application through the particular browser communication channel, and send, by the browser corresponding to the slave web application, the invocation information to a corresponding window in the browser corresponding to the slave web application.
Embodiment 26. The browser according to any one of embodiments 18 to 22, wherein when the communication type is a window communication channel, the processor is specifically configured to:
   acquire, from the window object, that the specific communication channel of the slave web application is a particular window communication channel; and
   send the invocation information of the master web application to a corresponding window of the slave web application through the particular window communication channel.
Embodiment 27. A server, comprising:
   a receiver, configured to receive a detection request of a master web application in a browser, wherein the detection request is sent by the master web application and comprises domain information and/or path information of the master web application;
   a processor, configured to perform matching between the domain information and/or path information of the master web application carried in the detection request and domain information and/or path information saved by a server, wherein:
      the processor is further configured to generate detection result information according to a matching result, wherein the detection result information indicates that the matching is successful or that the matching fails; and
      a sender, configured to send the detection result information to the master web application in the browser.
Embodiment 28. The server according to embodiment 27, wherein:
   the receiver is further configured to receive an application programming interface API registration request of a slave web application sent by the browser, wherein the API registration request comprises an API logic script of the slave web application; and
   the server further comprises:
      a memory, configured to save the API logic script of the slave web application.
Embodiment 29. The server according to embodiment 27 or 28, wherein:
   the receiver is further configured to receive a domain registration request of the master web application, wherein the domain registration request comprises the domain information and/or path information of the master web application; and
   the memory is further configured to save the domain information and/or path information comprised in the domain registration request.
Embodiment 30. The server according to embodiment 29, wherein:
   the receiver is further configured to receive an API acquisition request of the slave web application sent by the browser; and
   the sender is further configured to send the API logic script of the slave web application to the master web application in the browser, so that the master web application in the browser runs the API logic script of the slave web application.
Embodiment 31. A web application interaction system, comprising:
   the browser according to any one of embodiments 17 to 26; and the server according to any one of embodiments 27 to 30

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A web application interaction method, comprising:
acquiring a uniform resource locator, URL, of a slave web application from an invocation request, wherein the slave web application is an invoked web application;
acquiring a window object of the slave web application from a mapping relationship between a URL and a window object of the slave web application by using the URL of the slave web application;
acquiring invocation information of a master web application from the invocation request; and
sending the invocation information of the master web application to a window of the slave web application according to the window object of the slave web application, wherein the master web application is a web application that invokes the slave web application.

2. The method according to claim 1, wherein after the acquiring a uniform resource locator, URL, of a slave web application from an invocation request, the method further com-prises:
querying, in the mapping relationship between a URL and a window object of the slave web application, whether the URL of the slave web application exists; and
if the URL of the slave web application does not exist, opening the slave web application and saving a mapping relationship between the URL and the window object of the slave web application.

3. The method according to claim 1 or 2, wherein:
the window object comprises a window identifier, a communication type, and a specific communication channel; and
the communication type comprises a data sharing area, a window communication channel, or a browser communication channel.

4. The method according to any one of claims 1 to 3, wherein before the acquiring a uni-form resource locator, URL, of a slave web application from an invocation request, the method further comprises:
sending an application programming interface, API, registration request of the slave web application to a server, wherein the API registration request comprises an API logic script of the slave web application, so that the server returns the API logic script of the slave web application to the master web application after receiving an API acquisition request of the slave web application.

5. The method according to claim 4, wherein before the acquiring a uniform resource locator, URL, of a slave web application from an invocation request, the method further comprises:
sending a domain registration request of the master web application to the server, wherein the domain registration request comprises domain information and/or path information of the master web application, so that the server saves the domain infor-mation and/or path information comprised in the domain registration request.

6. The method according to claim 5, wherein after the acquiring invocation information of a master web application from the invocation request, the method further comprises:
sending a detection request of the master web application to the server, so that the server performs matching between domain information and/or path information of the master web application carried in the detection request and the domain information and/or path information saved by the server; and
receiving detection result information sent by the server, wherein the detection result information carries matching result information.

7. A web application interaction method, comprising:
receiving a detection request of a master web application in a browser, wherein the detection request is sent by the master web application and comprises domain infor-mation and/or path information of the master web application;
performing matching between the domain information and/or path information of the master web application carried in the detection request and domain information and/or path information saved by a server;
generating detection result information according to a matching result, wherein the detection result information indicates that the matching is successful or that the matching fails; and
sending the detection result information to the master web application in the browser.

8. The method according to claim 7, wherein the method further comprises:
receiving an application programming interface, API, registration request of a slave web application sent by the browser, wherein the API registration request comprises an API logic script of the slave web application; and
saving the API logic script of the slave web application.

9. The method according to claim 8, wherein the method further comprises:
receiving a domain registration request of the master web application, wherein the domain registration request comprises the domain information and/or path information of the master web application; and
saving the domain information and/or path information comprised in the domain reg-istration request.

10. The method according to claim 9, wherein after the matching is successful, the method further comprises:
receiving an API acquisition request of the slave web application sent by the browser; and
sending the API logic script of the slave web application to the master web application in the browser, so that the master web application in the browser runs the API logic script of the slave web application.

11. A browser, comprising:
a processor, configured to acquire a uniform resource locator, URL, of a slave web application from an invocation request, wherein the slave web application is an invoked web application; and
a memory, configured to acquire a window object of the slave web application from a mapping relationship between a URL and a window object of the slave web application by using the URL of the slave web application, wherein:
the processor is further configured to acquire invocation information of a master web application from the invocation request; and
the processor is further configured to send the invocation information of the master web application to a window of the slave web application according to the window object of the slave web application, wherein the master web application is a web application that invokes the slave web application.

12. The browser according to claim 11, wherein the processor is further configured to:
query, in the mapping relationship between a URL and a window object of the slave web application, whether the URL of the slave web application exists; and
if the URL of the slave web application does not exist, open the slave web application and save a mapping relationship between the URL and the window object of the slave web application.

13. The browser according to claim 11 or 12, wherein:
the window object comprises a window identifier, a communication type, and a specific communication channel; and
the communication type comprises a data sharing area, a window communication channel, or a browser communication channel.

14. The browser according to any one of claims 11 to 13, wherein the browser further comprises:
a sender, configured to send an application programming interface, API, registration request of the slave web application to a server, wherein the API registration request comprises an API logic script of the slave web application, so that the server returns the API logic script of the slave web application to the master web application after receiving an API acquisition request of the slave web application.

15. The browser according to claim 14, wherein:
the sender is further configured to send a domain registration request of the master web application to the server, wherein the domain registration request comprises domain information and/or path information of the master web application, so that the server saves the domain information and/or path information comprised in the domain regis-tration request.

16. The browser according to claim 15, wherein:
the sender is further configured to send a detection request of the master web application to the server, so that the server performs matching between domain information and/or path information of the master web application carried in the detection request and the domain information and/or path information saved by the server; and
the browser further comprises:
a receiver, configured to receive detection result information sent by the server.

17. A server, comprising:
a receiver, configured to receive a detection request of a master web application in a browser, wherein the detection request is sent by the master web application and com-prises domain information and/or path information of the master web application;
a processor, configured to perform matching between the domain information and/or path information of the master web application carried in the detection request and domain information and/or path information saved by a server, wherein:
the processor is further configured to generate detection result information according to a matching result, wherein the detection result information indicates that the matching is successful or that the matching fails; and
a sender, configured to send the detection result information to the master web appli-cation in the browser.

18. The server according to claim 17, wherein:
the receiver is further configured to receive an application programming interface, API, registration request of a slave web application sent by the browser, wherein the API registration request comprises an API logic script of the slave web application; and
the server further comprises:
a memory, configured to save the API logic script of the slave web application.

19. The server according to claim 17 or 18, wherein:
the receiver is further configured to receive a domain registration request of the master web application, wherein the domain registration request comprises the domain infor-mation and/or path information of the master web application; and
the memory is further configured to save the domain information and/or path infor-mation comprised in the domain registration request.

20. A web application interaction system, comprising:
the browser according to any one of claims 11 to 16; and
the server according to any one of claims 17 to 19.
